# EUROPEAN PATENT SPECIFICATION

(11) **EP 4 308 340 B1**
(45) Date of publication and mention of the grant of the patent: **01.07.2026**
(21) Application number: 22715702.1
(22) Date of filing: 14.03.2022
(51) Int. Cl.: B23Q 7/00, B23B 13/02, B23Q 7/06

(54) **APPARATUS FOR THE AUTOMATIC FEEDING OF BARS TO A MACHINE TOOL, WITH ELECTROMECHANICALLY-OPERATED DEVICES FOR SELECTING AND LOADING THE BARS**
VORRICHTUNG FÜR DIE AUTOMATISCHE VESORGUNG VON STANGEN IN EINE WERKZEUGMASCHINE, MIT ELEKTROMECHANISCHEN VORRICHTUNGEN FOR DIE AUSWAHL UND LADUNG DER STANGEN.
APPAREIL POUR LE RAVITAILLEMENT DE BARRES VERS UNE MACHINE-OUTIL, AVEC DES DISPOSITIFS ELECTROMECANIQUES POUR LA SELECTION ET CHARGEMENT DE BARRES

(30) Priority: 16.03.2021 IT 202100006269
(43) Date of publication of application: 24.01.2024
(73) Proprietor: CO.RA. 2000 S.r.l., 20900 Monza MB (IT)
(72) Inventor: CORTECCHIA, Francesco, 48018 Faenza RA (IT)
(74) Representative: Rondano, Davide
(86) International application number: PCT/IB2022/052270
(87) International publication number: WO 2022/195446

(56) References cited:
- EP-A1- 0 814 039
- EP-A1- 1 516 696
- CH-A5- 665 789
- US-A1- 2006 153 666

## Description

### Technical field of the invention

The present invention relates generally to an apparatus for the automatic feeding of bars to a machine tool, such as a lathe.

### State of the art

Apparatuses for the automatic feeding of bars to machine tools are known, which comprise a loading system of the so-called "pilgrim step" type by means of which bars of small diameter (in particular, bars having a diameter of less than 6 mm) are advanced one at a time to a loading position where a bar pushing device grasps the bar to be machined and moves it longitudinally towards the machine tool. Such a loading system, which is placed at a certain height from the ground (at least 1 m, usually about 1,20 m), must be fed manually by the operator, which means that the operator must bring the bars one by one to the height of the loading system.

These known apparatuses are also provided, for feeding bars with a larger diameter, and therefore with a larger mass, with a loading system having an inclined plane on which the bars are arranged so that the bars advance one by one to the loading position by gravity.

These known apparatuses involve therefore different ways of loading the bars depending on the diameter of the bars.

Furthermore, these known apparatuses use pneumatic drives to drive the loading system, which leads to increased costs both in terms of operation and in terms of maintenance of the apparatus.

An apparatus for the automatic feeding of bars to a machine tool is known for example from CH 665 789 A5.

### Summary of the invention

It is therefore an object of the present invention to provide an apparatus for the automatic feeding of bars to a machine tool which is not affected by the drawbacks of the prior art discussed above.

More particularly, it is an object of the present invention to provide an apparatus for the automatic feeding of bars to a machine tool which does not have pneumatic drives and therefore does not require a source of compressed air for its operation. Furthermore, it is an object of the present invention to provide an apparatus for the automatic feeding of bars to a machine tool which is capable of feeding bars of both small cross-section and large cross-section, in particular, in case of circular cross-section bars, bars having a diameter in the range from 1,5 mm to 80 mm.

These and other objects are fully achieved according to the present invention by virtue of an apparatus for the automatic feeding of bars to a machine tool having the features defined in the appended independent claim 1.

Preferred embodiments of the apparatus according to the present invention are defined in the dependent claim.

In summary, the invention is based on the idea of providing an apparatus comprising:
- a storage station, located below the feeding area and configured to accommodate a set of bars of the same diameter, placed side by side and in contact with each other,
- a plurality of electromechanically-operated selection and loading devices, placed at a distance from each other along the feed direction of the bars towards the machine tool and configured to be moved vertically in either direction to pick up each time a single bar from the storage station and to place the bar thus picked up in the feeding area, and
- electrical control means arranged to synchronously control the vertical movement in either direction of said selection and loading devices.

Thanks to such a configuration, the apparatus according to the present invention is able to automatically pick up bars from a storage area which is located below the feeding area, and which can therefore be loaded by the operator without requiring the bars to be lifted up to the height of the feeding area, and to place each time the bar thus picked up in the feeding area, using only an electric motor as a power source, and therefore without requiring the use of a source of compressed air.

Further features and advantages of the present invention will be apparent from the following detailed description, given purely by way of non-limiting example.

### Brief description of the drawings

In the following detailed description of the invention, reference will be made to the figures of the accompanying drawings, wherein:
- Figure 1 is a perspective view of part of an apparatus for the automatic feeding of bars to a machine tool according to an embodiment of the present invention;
- Figure 2 is a perspective view of a chute of the storage station of the apparatus of Figure 1;
- Figure 3 is a perspective view of a stopping device associated with the chute of Figure 2;
- Figures 4 to 10 are perspective views showing, in whole or in part, a selection and loading device of the apparatus of Figure 1, under various operating conditions of the apparatus; and
- Figure 11 is a perspective view of a rocker arm, cooperating with the selection and loading device of Figures 4 to 10.

### Detailed description

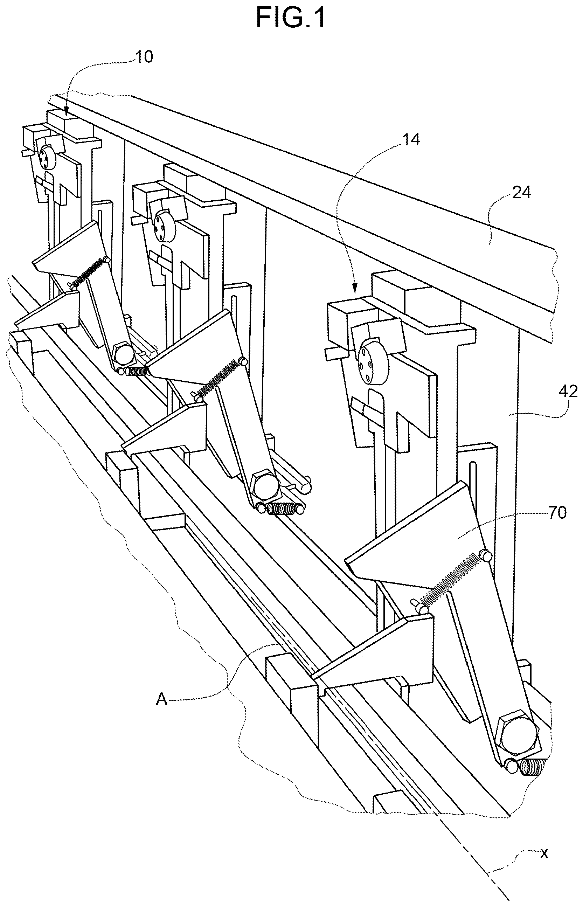

Referring first to Figure 1, an apparatus for the automatic feeding of bars (hereinafter simply referred to as "apparatus") designed to automatically feed a semi-finished product B of metallic material in the form of a bar (hereinafter simply referred to as "bar") each time to a machine tool (not shown), such as in particular a lathe, is indicated 10. In Figure 1 the apparatus 10 is only partially shown, only a section of the apparatus in the direction of its length being shown and, of this section, only the upper part.

In the following description, reference will be made to a bar B having a circular cross-section, but it is clear that the apparatus of the present invention is not limited to use with bars having a circular cross-section, but can operate with bars having a different cross-section, for example bars having a square cross-section, a hexagonal cross-section, etc. First of all, the apparatus 10 has, in a per-se-known manner, a feeding area A which extends along a horizontal longitudinal direction x (hereinafter referred to as the feed direction or longitudinal direction) and is located at a certain height above the ground, in particular a height greater than 1 m, for example a height of approximately 1,20 m. The feeding area A is basically configured as a channel-shaped area and is designed to receive each time a bar B to be fed to the machine tool.

The apparatus 10 further comprises a bar pushing device (not shown, but anyway of a per-se-known type) for pushing towards the machine tool, along the feed direction x, the bar B positioned in the feeding area A, so as to feed the bar B to the machine tool as the latter proceeds with the machining. When the usable portion of the B bar is exhausted, the remaining bar section is brought back by the bar pushing device and discharged into a special discharge compartment (not shown). At this point a new bar B is loaded into the feeding area A, as will be explained in detail in the remaining part of the present description, to be fed to the machine tool.

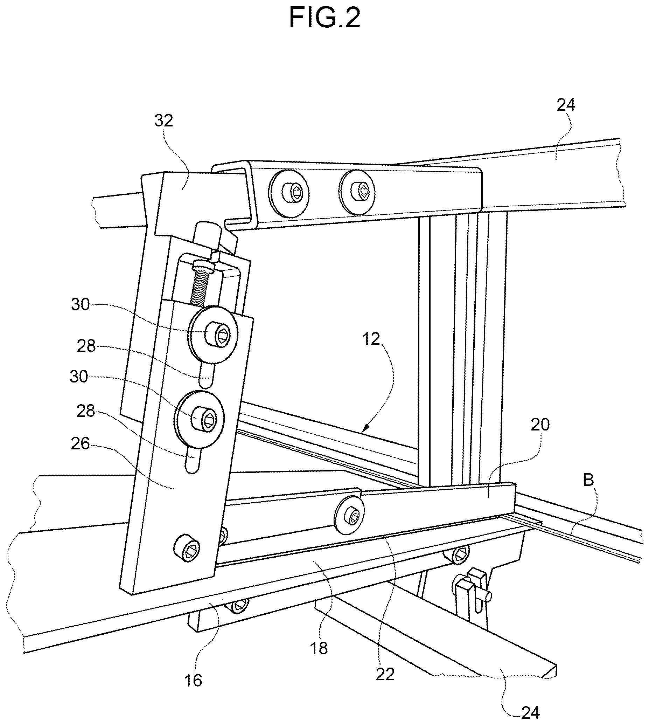

The bars B to be fed to the machine tool are stored in a storage station 12 (partially shown in Figure 2) located below the feeding area A, to be taken from there one at a time and placed in the feeding area A by means of a series of selection and loading devices 14 (some of which are shown in Figure 1) spaced from each other along the feed direction x.

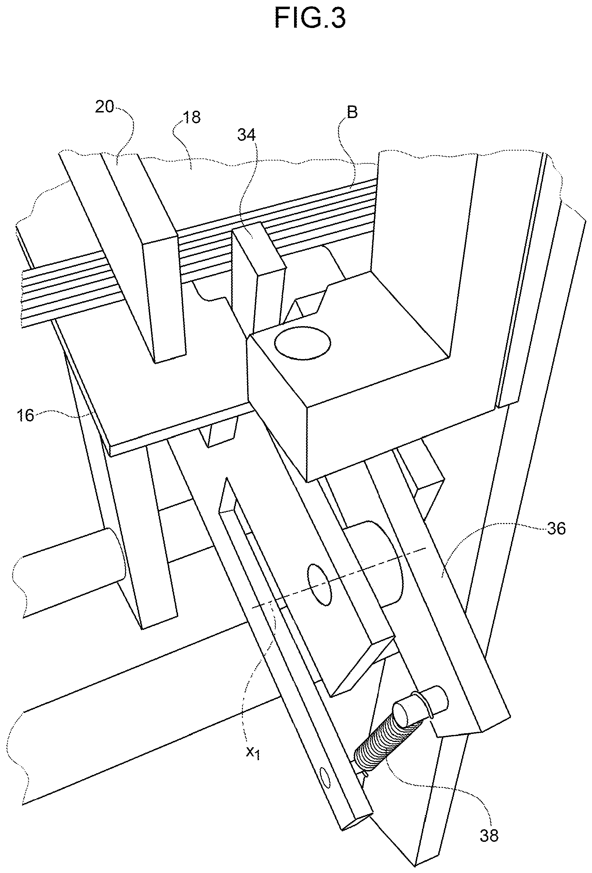

As shown in Figures 2 and 3, the storage station 12 comprises a series of chutes 16 (in particular one for each selection and loading device 14), each comprising a respective flat surface 18, inclined at a certain angle to the horizontal, on which the bars B to be fed rest, arranged side by side and in contact with each other. Each chute 16 is associated with a respective adjustment element 20, made for example as an elongated plate element, which extends parallel to the flat surface 18 so as to identify with the latter a gap 22 of a given height. The distance between the flat surface 18 and the associated adjustment element 20 can be manually modified by the operator so as to adapt the height of the gap 22 to the diameter (or, more generally, to the transverse dimension) of the bars B to be loaded. In the embodiment proposed herein, the chutes 16 are fixed with respect to a support structure 24 (only partially shown in Figure 2) of the apparatus 10, while the adjustment elements 20 are movable in a direction perpendicular to the flat surfaces 18 of the chutes 16. In particular, the adjustment elements 20 are each mounted on a respective support 26 having slots 28 in which screws 30 are inserted for releasably fixing the support 26 to an arm 32 integral with the support structure 24, so as to allow, depending on the diameter of the bars B to be loaded, the adjustment element 20 to be positioned each time at the desired distance from the respective flat surface 18.

As can be seen in Figure 3, the bars B arranged on the chute 16 are retained by a detent 34 projecting upwards from the flat surface 18 of the chute 16. The detent 34 is mounted at the end of an arm 36 pivoted at an intermediate point thereof so as to be rotatable about an axis of rotation x₁, preferably oriented parallel to the feed direction x. A spring 38 is connected to the end of the arm 36 opposite the detent 34 and is configured to exert a downwardly directed elastic force on said end and thus to normally keep the detent 34 in the position of Figure 3, namely projecting upwards from the flat surface 18. As will be explained later, the detent 34 is movable downwards, in particular until it no longer projects from the flat surface 18, against the elastic biasing force of the spring 38, by means of a pusher member 40 of the respective selection and loading device 14 acting on the arm 36, so as to allow the selection and loading device 14 to select and load the first one of the bars B arranged on the chute 16 (i.e. the bar B in contact with the detent 34).

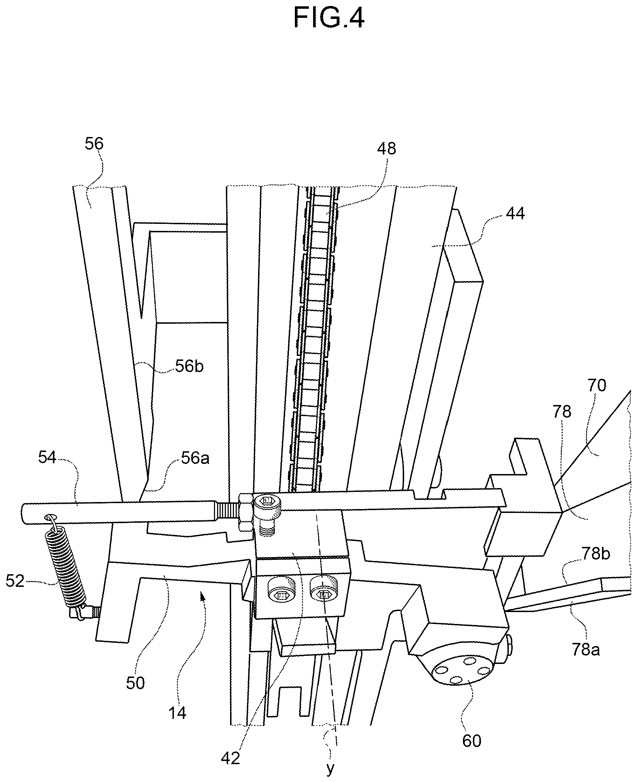

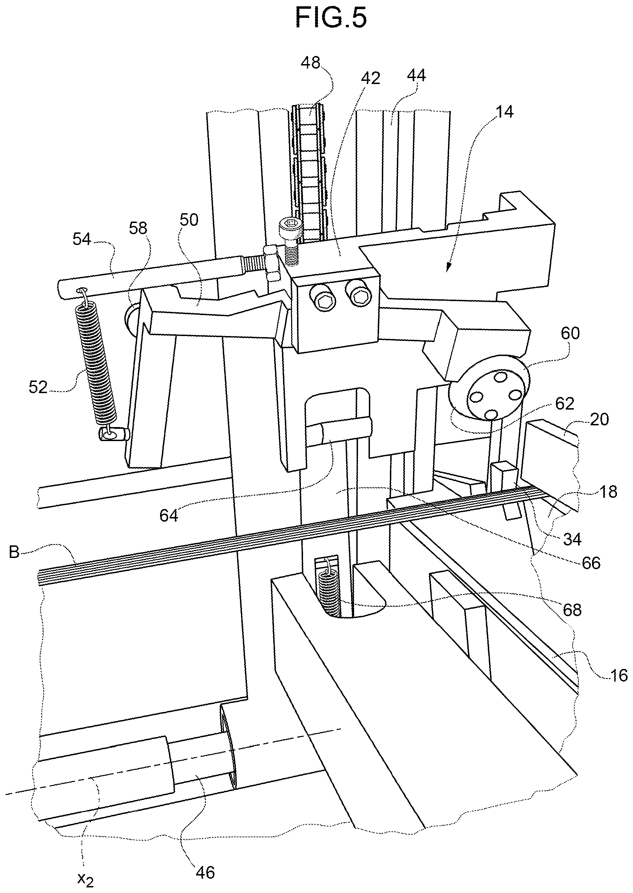

Referring now to Figure 4, each selection and loading device 14 comprises first of all a support body, or carriage, 42 (hereinafter simply referred to as "carriage") vertically movable along a guide profile 44. The vertical motion of the carriage 42 is driven by an electric motor (not shown) connected to the carriage via motion transmission and conversion means. Preferably, the apparatus 10 comprises a single electric motor arranged to drive a drive shaft 46 (partially shown in Figure 5) into rotation about a horizontal axis of rotation x₂, in particular an axis of rotation parallel to the feed direction x. The drive shaft 46 carries a plurality of driving gear wheels (not shown), in particular one for each carriage 42, each of which drives a respective chain 48, which is mounted within a respective guide profile 44 and to which a respective carriage 42 is connected. In this way, the rotary motion of the drive shaft 46 in one direction or the other about the axis of rotation x₂ is converted into a vertical translational motion, upwards or downwards, of each of the carriages 42. In this respect, the carriages 42 are positioned vertically aligned with each other and, being synchronously driven by the drive shaft 46 and the chains 48, they will all be at the same vertical height at any time. Of course, instead of a chain, other motion transmission members, such as belts, might be provided to transmit motion from the drive shaft 46 to the carriages 42.

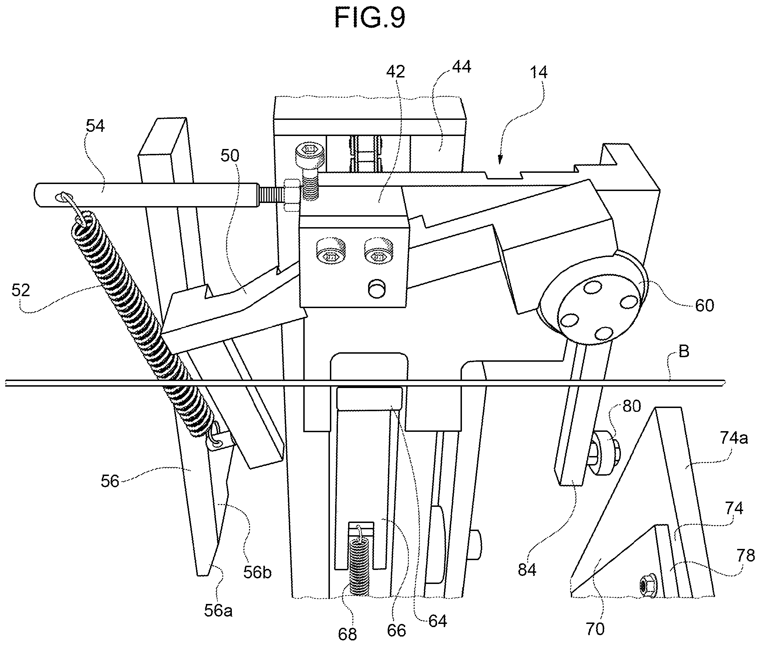

Each selection and loading device 14 further comprises a rocker arm 50 pivoted at an intermediate point thereof to the carriage 42 so as to oscillate with respect to the latter about an axis of rotation y, oriented horizontally and perpendicular to the feed direction x, between a first position (shown in Figure 4) and a second position (shown in Figure 9). The rocker arm 50 is normally held in the aforementioned first position by a spring 52, which in the illustrated embodiment is a cylindrical helical spring connected at its lower end to one end (left end, with respect to the point of view of a person looking at Figures 4 and 9) of the rocker arm 50 and at its upper end to a rod 54 attached to the carriage 42 and extending above the rocker arm 50.

The rotation of the rocker arm 50 from the first position of Figure 4 to the second position of Figure 9 is controlled by a cam mechanism comprising a cam 56, fixed to the support structure 24 of the apparatus 10 or to the guide profile 44, and a roller 58, rotatably mounted at the same end (left end, with respect to the point of view of a person looking at Figures 4 and 9) of the rocker arm 50 to which the spring 52 is connected. The cam 56 has a first surface 56a and a second surface 56b, adjacent to the first surface 56a, with which the roller 58 cooperates as a result of the vertical translational motion of the selection and loading device 14. The first surface 56a is inclined to the vertical, while the second surface 56b is oriented vertically. When the roller 58, as a result of the upward movement of the selection and loading device 14, comes into contact with the cam 56, it first rolls along the first surface 56a, thereby causing the rocker arm 50 to rotate from the first position to the second position, and then rolls along the second surface 56b, thereby keeping the rocker arm 50 in the second position. Conversely, when the selection and loading device 14 moves downwards, as soon as the roller 58 comes into contact with the first surface 56a of the cam 56 the rocker arm 50 begins to rotate from the second position to the first position, under the action of the spring 52, reaching and keeping the first position starting from when the roller 58 loses contact with the cam 56.

At the end of the rocker arm 50 opposite to the one to which the spring 52 is connected (right end, with respect to the point of view of a person looking at Figures 4 and 9), the rocker arm 50 carries a selector member 60 having the function of separating the first one of the bars B arranged on the chute 16, as better explained below. In the embodiment proposed herein, the selector member 60 is configured as a member having frustoconical shape, with a flanged edge 62 (best observed in Figure 5) in the region of the major base of said member. The taper of the selector member 60, i.e. the slope of the tapered side surface of that member, is not less than the slope of the flat surface 18 of the chute 16 associated with the respective selection and loading device 14.

The selection and loading device 14 further comprises a bracket-like member 64 which is arranged below the rocker arm 50, in an intermediate position between the opposite ends thereof, and is designed to support the bar B during transport from the storage station 12 towards the feeding area A. In the example shown in the drawings, the bracket-like member 64 is carried by a support structure 66 constrained to the chain 48, so as to move vertically as a single piece with the carriage 42 and the rocker arm 50. The support structure 66 is also pivotally mounted about a horizontal axis of rotation (not shown), parallel to the feed direction x, so as to allow the bracket-like member 64 to move between a first position (Figures 4 and 5), in which said member protrudes towards the chute 16, and a second position (not shown), in which said member is retracted with respect to the first position, that is, moved towards the guide profile 44. The bracket-like member 64 is normally held in the first position by means of a spring 68 (Figure 5) connected to the support structure 66.

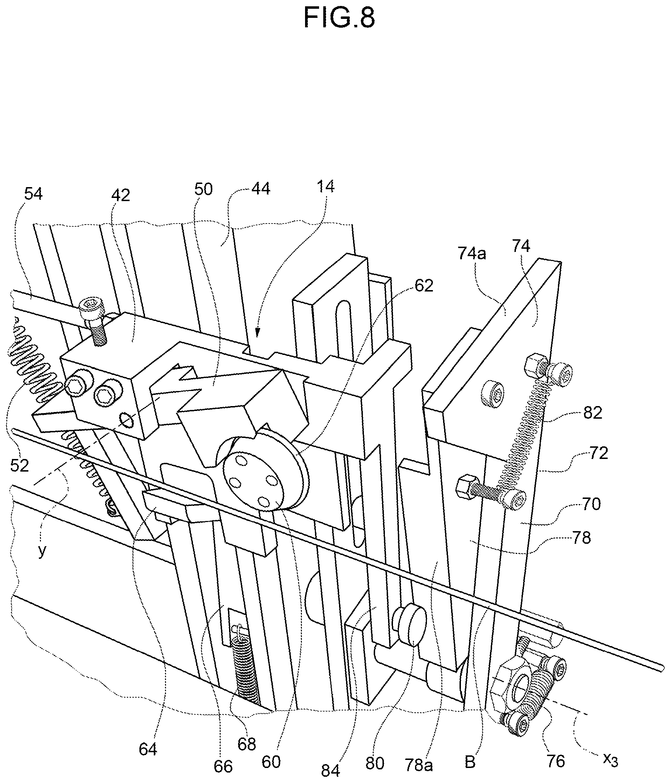

With reference now to Figures 8, 10 and 11, each selection and loading device 14 is associated with an oscillating lever 70 mounted on the support structure 24 of the apparatus 10 above the feeding area A so as to be rotatable about an axis of rotation x₃ parallel to the feed direction x. The oscillating lever 70 has a substantially L-shaped configuration, with a first lever portion 72 of greater length, hinged at its lower end about the aforementioned axis of rotation x₃, and a second lever portion 74 of lesser length, extending from the upper end of the first lever portion 72, substantially perpendicular thereto. The second lever portion 74 has a substantially straight upper edge 74a.

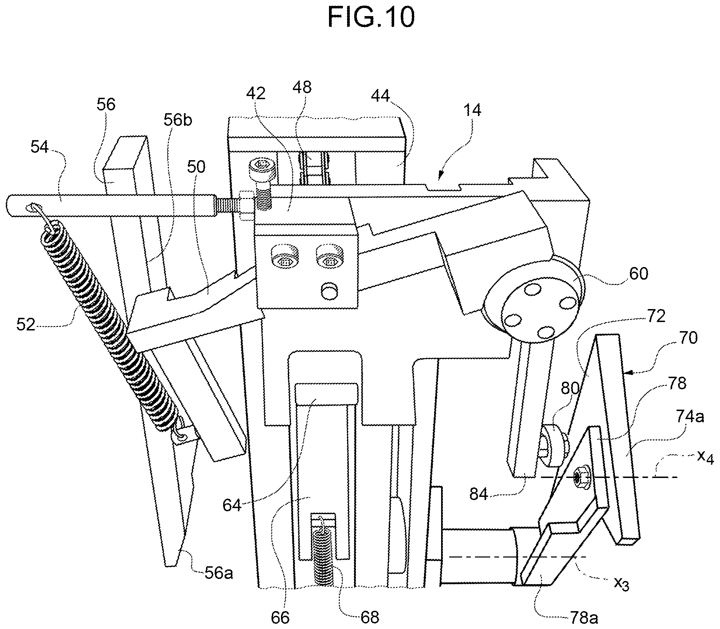

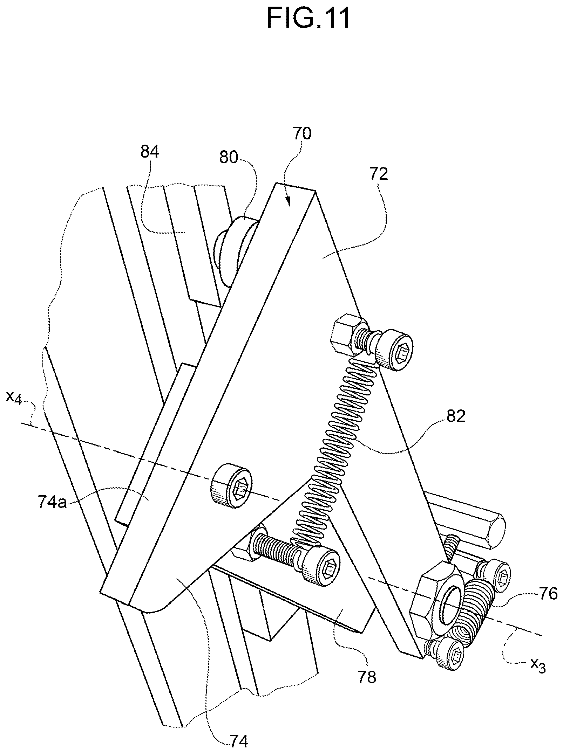

The oscillating lever 70 is normally held, by means of a spring 76, made for example as a cylindrical helical spring, in a first position (shown in Figures 10 and 11), in which the oscillating lever 70 is rotated towards the feeding area A and the upper edge 74a of the second lever portion 74 is inclined towards the feeding area A so as to act as a chute for the bar B transported by the selection and loading device 14, as will be explained in detail below. The oscillating lever 70 is movable, against the action of the spring 76, to a second position (shown in Figure 8), rotated backwards with respect to the first position about the axis of rotation x₃, so that the second lever portion 74 is located behind the selection and loading device 14. In this second position, the upper edge 74a of the second lever portion 74 is oriented substantially horizontally.

The oscillating lever 70 carries with it a profiled member 78 having an outer flat rolling surface 78a and an inner flat rolling surface 78b, parallel to the outer flat rolling surface 78a, with which a roller 80 carried by the selection and loading device 14 is arranged to cooperate. The profiled member 78 is hinged to the oscillating lever 70, in particular to the second lever portion 74, so as to be rotatable with respect to the latter about an axis of rotation x₄ parallel to the feed direction x between a first retracted position (shown in Figures 8, 10 and 11) and a second extracted position (not shown), in which the profiled member 78 is rotated by a certain angle towards the feeding area A with respect to the first position. A spring 82 normally holds the profiled member 78 in the aforementioned first position.

In the proposed embodiment, the roller 80 is mounted at the lower end of a vertical arm 84 fixed to the carriage 42 of the selection and loading device 14, in particular on the same side of the selector member 60 with respect to the guide profile 44. As will be explained later, the roller 80 cooperates with the outer flat rolling surface 78a and the inner flat rolling surface 78b of the profiled member 78 to control the rotation of the oscillating lever 70 about the axis of rotation x₃.

The operation of the apparatus 10 will now be described, with specific reference to the steps of selecting and picking up a bar B from the storage station 12, transporting the bar B towards the feeding area A and unloading the bar B in the feeding area A.

With the bars B positioned side by side and in contact with each other on the flat surface 18 of the chute 16 (Figure 3 shows a reduced number of bars B, in particular only seven, but of course many more bars can be loaded onto the chute 16, with the maximum number depending on the diameter of the bars), locked by the detent 34, the selection and loading devices 14 are moved vertically downwards by the electric motor via the respective chains 48, until they reach the storage station 12.

Figure 5 shows a selection and loading device 14 moving downwards, just before reaching the lower end-of-travel position. The rocker arm 50 is in the aforementioned first position, i.e. with the selector member 60 moved downwards.

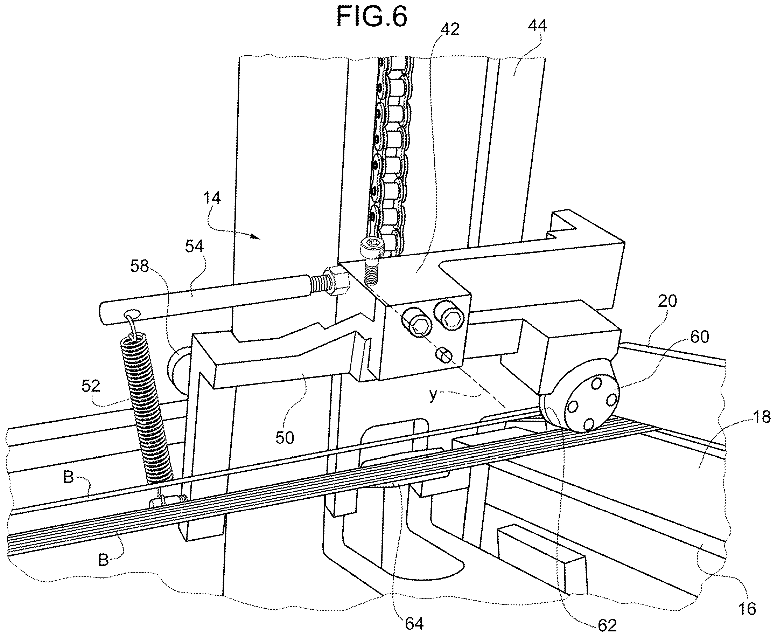

Figure 6 shows the selection and loading device 14 in the lower end-of-travel position, with a bar B separated from the other bars B positioned on the chute 16 and ready to be transported upwards towards the feeding area A. In the movement from the condition shown in Figure 5 to the condition shown in Figure 6, first the selector member 60 comes into contact with the bars B. The flanged edge 62 of the selector member 60 is inserted between the first and second bars B, separating them, while the tapered side surface of the selector member 60 clamps the remaining bars B against the flat surface 18. Starting from when the selector member 60 comes into contact with the bars B, the carriage 42 of the selection and loading device 14 can move further downwards, thus causing the rocker arm 50 to rotate from the first position to the second position (or, more generally, to any intermediate position between the first position and the second position). As a result of this further downward movement, the pusher member 40 of the selection and loading device 14 pushes the arm 36 downwards, against the action of the spring 38, thus bringing the detent 34 below the flat surface 18 and thus allowing the first bar B to move downwards along the flat surface 18 and be loaded onto the bracket-like member 64 of the selection and loading device 14. Furthermore, as a result of this further downward movement, the bracket-like member 64 is located below the lower trailing edge of the flat surface 18, thereby allowing the bar B to be loaded onto that member.

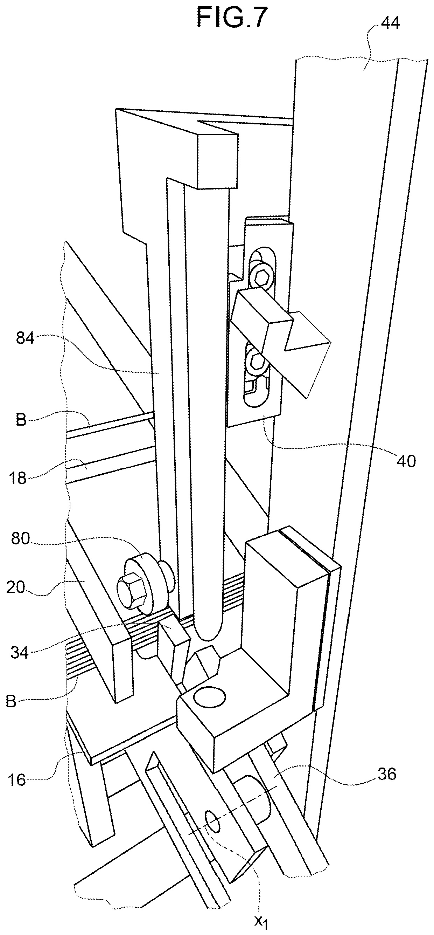

Figure 7 shows the subsequent phase of upward movement of the selection and loading device 14, with the bar B being carried by the bracket-like members 64 of the various selection and loading devices 14 (only one of which is visible, albeit partially, in that figure). As can be seen from that figure, the detent 34 has returned, due to the action of the spring 38, to the normal operating position in which it projects upwards from the flat surface 18, thereby restraining the remaining bars B.

Referring now to Figure 8, in order to avoid interference, during the upward movement, between the bar B and the oscillating levers 70, the roller 80 of each selection and loading device 14, cooperating with the outer flat rolling surface 78a of the respective profiled member 78, causes a backward rotation (i.e. away from the bar B carried by the selection and loading devices 14) about the axis of rotation x₃ of each assembly formed by the profiled member 78 and the oscillating lever 70.

As shown in Figure 9, when as a result of the further upward movement of the selection and loading devices 14 the roller 80 of each selection and loading device 14 disengages from the outer flat rolling surface 78a of the respective profiled member 78, the oscillating lever 70, and with it the respective profiled member 78, rotates forward under the action of the spring 76 until it reaches the aforementioned first position. The system is configured in such a way that the forward rotation of the oscillating lever 70 occurs when the bar B carried by the selection and loading device 14 is sufficiently high not to be struck by the oscillating lever 70. As mentioned above, with the oscillating levers 70 each placed in the first position, the respective upper edges 74a are tilted downwards.

The selection and loading devices 14 are now moved downwards. Accordingly, as soon as the bar B carried by them comes into contact with the upper edges 74a of the oscillating lever 70, it disengages from the bracket-like members 64 of the selection and loading devices 14 and, rolling downwards along the upper edges 74a of the oscillating levers 70, falls into the feeding area A. This condition is shown in Figure 10.

Continuing in their downward movement, the selection and loading devices 14 arrive at a position below the oscillating levers 70, ready to pick up, as soon as necessary, a new bar B from the storage station 12. The movement of the selection and loading devices 14 past the oscillating levers 70 is made possible by the fact that, in the downward movement, the roller 80 of each selection and loading device 14 cooperates with the inner flat rolling surface 78b of the profiled member 78 associated with the respective oscillating lever 70, thereby causing the profiled member 78 to rotate relative to the oscillating lever 70 about the axis of rotation x₄ against the action of the spring 82.

As it is clear from the above description, an apparatus according to the present invention allows to perform automatically the operations of selecting and picking up the bars to be processed from a storage station located below the feeding area, and loading the selected bar into the feeding area. These operations are controlled by an electromechanical drive system which uses an electric motor as the only power source, without therefore requiring a source of compressed air, unlike the known apparatuses which, as mentioned above, use pneumatic drive systems, and without therefore entailing the drawbacks, in terms of operating and maintenance costs, associated with the use of pneumatic drive systems.

This apparatus is also very convenient to use for the operator, as he only has to supply the storage station with bars. This operation simply requires inserting the bars through the gaps between the flat surfaces of the chutes and the associated adjustment elements, which - on the other hand - does not require lifting the bars up to the height of the feeding area, as the storage station is located below the feeding area.

In addition, the apparatus according to the invention is suitable for being used with bars of even very different diameters, from very small (for example, up to 1,5 mm) to very large (for example, up to 80 mm), as it is simply required, depending on the diameter of the bars, to adjust the height of the gaps between the inclined surfaces of the chutes and the associated adjustment elements.

The present invention has been described herein with reference to a preferred embodiment thereof. It is to be understood that other embodiments may be envisaged, which share the same scope of protection of the accompanying claims.

## Claims

1. Apparatus for the automatic feeding of bars (B) to a machine tool, comprising
a feeding area (A) which extends longitudinally and is able to receive each time a bar (B) to be fed to the machine tool,
a bar pushing device for pushing the bar (B) positioned in the feeding area (A) towards the machine tool, along a horizontal feed direction (x),
a storage station (12) located below the feeding area (A) and configured to accommodate a set of bars (B), placed side by side and in contact with each other,
a plurality of electromechanically-operated selection and loading devices (14), spaced from each other along said feed direction (x) and configured to be vertically moved in one direction or in the other in order to pick up each time a single bar (B) from said set of bars (B) accommodated in the storage station (12) and to place the bar (B) thus picked up in the feeding area (A), and
electrical control means (46, 48) arranged to synchronously control the vertical movement of said selection and loading devices (14) in one direction or the other,
**characterised in that** each selection and loading device (14) comprises a vertically movable support body (42), a rocker arm (50) pivoted at an intermediate point thereof to the support body (42) to oscillate with respect to the support body (42) about an axis of rotation (y), which is oriented horizontally and perpendicular to said feed direction (x), between a first position and a second position, a selector member (60) mounted at an end of the rocker arm (50) and configured to separate each time one of the bars (B) arranged in the storage station (12) from the remaining bars (B), and a bracket-like member (64) arranged below the rocker arm (50) and configured to support the bar (B) in the movement from the storage station (12) towards the feeding area (A).

2. Apparatus according to claim 1, wherein said electrical control means (46, 48) comprise a drive shaft (46) rotatable about a horizontal axis of rotation (x₂), in particular parallel to said feed direction (x), an electric motor arranged to drive the drive shaft (46) into rotation about said axis of rotation (x₂), and motion conversion means (48) for converting the rotary motion of the drive shaft (46) into a vertical translational motion of each selection and loading device (14).

3. Apparatus according to claim 2, wherein said motion conversion means (48) comprise, for each selection and loading device (14), a respective chain or belt.

4. Apparatus according to any one of the preceding claims, wherein the storage station (12) comprises a plurality of chutes (16), each associated with a respective selection and loading device (14) and each comprising a respective flat surface (18), inclined to the horizontal, on which said set of bars (B) is intended to be placed.

5. Apparatus according to claim 4, wherein the storage station (12) further comprises, for each chute (16), a respective adjustment element (20) extending parallel to the flat surface (18) so as to identify with the latter a gap (22) for inserting the bars (B) and is adjustable each time at a given distance from the flat surface (18) so as to adapt the height of the gap (22) to the transverse dimension of the bars (B) to be loaded into the storage station (12).

6. Apparatus according to claim 4 or claim 5, wherein the storage station (12) further comprises, for each chute (16), at least one stop member (34) which is movable between a first position, in which it projects upwards from the flat surface (18) to hold the bars (B) arranged on the chute (16) in position, and a second position, in which it is arranged completely below the flat surface (18) to allow the associated selection and loading device (14) to select and load the first one of the bars (B) placed on the chute (16).

7. Apparatus according to claim 6, wherein the stop member (34) of each chute (16) is normally kept, by an elastic biasing action, in said first position and wherein each selection and loading device (14) is provided with a pusher member (40) arranged to cause the displacement of the stop member (34) of the associated chute (16) from said first position to said second position as a result of the downward vertical movement of the selection and loading device (14).

8. Apparatus according to any one of the preceding claims, wherein the selector member (60) of each selection and loading device (14) is configured as member with a frustoconical shape.

9. Apparatus according to any one of claims 4 to 7, wherein the selector member (60) of each selection and loading device (14) has a taper not less than the slope of the flat surface (18) of the respective chute (16).

10. Apparatus according to claim 8 or claim 9, wherein the selector member (60) of each selection and loading device (14) comprises a flanged edge (62) at a major base of said member.

11. Apparatus according to any one of the preceding claims, wherein each selection and loading device (14) comprises spring means (52) for exerting on the rocker arm (50) a biasing action tending to keep the rocker arm in said first position, and wherein the apparatus (10) further comprises, for each selection and loading device (14), a cam mechanism (56, 58) arranged to control the rotation of the rocker arm (50), in cooperation with said spring means (52), between said first position and said second position.

## Patentansprüche

1. Einrichtung zum automatischen Zuführen von Stangen (B) zu einer Werkzeugmaschine, umfassend:
einen Zuführbereich (A), der sich in Längsrichtung erstreckt und in der Lage ist, jedes Mal eine Stange (B) aufzunehmen, die der Werkzeugmaschine zugeführt werden soll,
eine Stangenschubvorrichtung zum Schieben der in dem Zuführbereich (A) positionierten Stange (B) in Richtung der Werkzeugmaschine entlang einer horizontalen Zuführrichtung (x),
eine Lagerstation (12), die sich unterhalb des Zuführbereichs (A) befindet und konfiguriert ist, um einen Satz von Stangen (B) unterzubringen, die nebeneinander und in Kontakt miteinander platziert sind,
eine Vielzahl von elektromechanisch betätigten Auswahl- und Beladungsvorrichtungen (14), die entlang der Zuführrichtung (x) voneinander beabstandet und konfiguriert sind, um in die eine oder die andere Richtung vertikal bewegt zu werden, um jedes Mal eine einzelne Stange (B) aus dem in der Lagerstation (12) untergebrachten Satz von Stangen (B) aufzunehmen und die so aufgenommene Stange (B) in dem Zuführbereich (A) zu platzieren, und
elektrische Steuermittel (46, 48), die angeordnet sind, um die vertikale Bewegung der Auswahl- und Beladungsvorrichtungen (14) in die eine oder die andere Richtung synchron zu steuern,
**dadurch gekennzeichnet, dass**
jede Auswahl- und Beladungsvorrichtung (14) einen vertikal bewegbaren Stützkörper (42), einen Schwenkarm (50), der an einem Zwischenpunkt davon schwenkbar an dem Stützkörper (42) angebracht ist, um in Bezug auf den Stützkörper (42) um eine Drehachse (y), die horizontal und senkrecht zu der Zuführrichtung (x) ausgerichtet ist, zwischen einer ersten Position und einer zweiten Position zu schwingen, ein Auswahlelement (60), das an einem Ende des Schwenkarms (50) montiert und konfiguriert ist, um jedes Mal eine der Stangen (B), die in der Lagerstation (12) angeordnet sind, von den verbleibenden Stangen (B) zu trennen, und ein bügelartiges Element (64) umfasst, das unterhalb des Schwenkarms (50) angeordnet und konfiguriert ist, um die Stange (B) in der Bewegung von der Lagerstation (12) zu dem Zuführbereich (A) zu stützen.

2. Einrichtung nach Anspruch 1, wobei die elektrischen Steuermittel (46, 48) eine Antriebswelle (46) umfassen, die um eine horizontale Drehachse (x₂) drehbar ist, insbesondere parallel zu der Zuführrichtung (x), einen Elektromotor, der angeordnet ist, um die Antriebswelle (46) in Drehung um die Drehachse (x₂) anzutreiben, und Bewegungsumwandlungsmittel (48) zum Umwandeln der Drehbewegung der Antriebswelle (46) in eine vertikale Translationsbewegung jeder Auswahl- und Beladungsvorrichtung (14).

3. Einrichtung nach Anspruch 2, wobei die Bewegungsumwandlungsmittel (48) für jede Auswahl- und Beladungsvorrichtung (14) eine jeweilige Kette oder einen jeweiligen Riemen umfassen.

4. Einrichtung nach einem der vorstehenden Ansprüche, wobei die Lagerstation (12) eine Vielzahl von Rutschen (16) umfasst, die jeweils einer jeweiligen Auswahl- und Beladungsvorrichtung (14) zugeordnet sind und die jeweils eine jeweilige ebene Oberfläche (18) umfassen, die zu der Horizontalen geneigt ist, auf der der Satz von Stangen (B) platziert werden soll.

5. Einrichtung nach Anspruch 4, wobei die Lagerstation (12) ferner für jede Rutsche (16) ein jeweiliges Einstellelement (20) umfasst, das sich parallel zu der flachen Oberfläche (18) erstreckt, um mit dieser einen Spalt (22) zum Einführen der Stangen (B) zu identifizieren und jedes Mal in einem gegebenen Abstand von der flachen Oberfläche (18) einstellbar ist, um die Höhe des Spalts (22) an der Querabmessung der in die Lagerstation (12) zu ladenden Stangen (B) einzustellen.

6. Einrichtung nach Anspruch 4 oder Anspruch 5, wobei die Lagerstation (12) ferner für jede Rutsche (16) mindestens ein Anschlagelement (34) umfasst, das zwischen einer ersten Position, in der es von der flachen Oberfläche (18) nach oben vorsteht, um die auf der Rutsche (16) angeordneten Stangen (B) in Position zu halten, und einer zweiten Position, in der es vollständig unterhalb der flachen Oberfläche (18) angeordnet ist, um der zugeordneten Auswahl- und Beladungsvorrichtung (14) zu ermöglichen, die erste der auf der Rutsche (16) platzierte Stange (B) auszuwählen und zu beladen, bewegbar ist.

7. Einrichtung nach Anspruch 6, wobei das Anschlagelement (34) jeder Rutsche (16) normalerweise durch eine elastische Vorspannaktion in der ersten Position gehalten wird und wobei jede Auswahl- und Beladungsvorrichtung (14) mit einem Schiebeelement (40) versehen ist, das angeordnet ist, um die Verlagerung des Anschlagelements (34) der zugeordneten Rutsche (16) von der ersten Position in die zweite Position als Ergebnis der nach unten gerichteten vertikalen Bewegung der Auswahl- und Beladungsvorrichtung (14) zu bewirken.

8. Einrichtung nach einem der vorstehenden Ansprüche, wobei das Auswahlelement (60) jeder Auswahl- und Beladungsvorrichtung (14) als Element mit einer kegelstumpfförmigen Form konfiguriert ist.

9. Einrichtung nach einem der Ansprüche 4 bis 7, wobei das Auswahlelement (60) jeder Auswahl- und Beladungsvorrichtung (14) eine Verjüngung aufweist, die nicht geringer ist als die Neigung der flachen Oberfläche (18) der jeweiligen Rutsche (16).

10. Einrichtung nach Anspruch 8 oder Anspruch 9, wobei das Auswahlelement (60) jeder Auswahl- und Beladungsvorrichtung (14) einen angeflanschten Rand (62) an einer Hauptbasis des Elements umfasst.

11. Einrichtung nach einem der vorstehenden Ansprüche, wobei jede Auswahl- und Beladungsvorrichtung (14) Federmittel (52) zum Ausüben einer Vorspannaktion auf den Schwenkarm (50) umfasst, die dazu neigt, den Schwenkarm in der ersten Position zu halten, und wobei die Einrichtung (10) ferner für jede Auswahl- und Beladungsvorrichtung (14) einen Nockenmechanismus (56, 58) umfasst, der angeordnet ist, um die Drehung des Schwenkarms (50) in Zusammenwirkung mit den Federmitteln (52) zwischen der ersten Position und der zweiten Position zu steuern.

## Revendications

1. Appareil pour l'introduction automatique de barres (B) dans une machine-outil, comprenant
une zone d'introduction (A) qui s'étend longitudinalement et est apte à recevoir à chaque fois une barre (B) à introduire dans la machine-outil,
un dispositif de poussée de barre pour pousser la barre (B) positionnée dans la zone d'introduction (A) vers la machine-outil, le long d'une direction d'introduction horizontale (x),
une station de stockage (12) située au-dessous la zone d'introduction (A) et conçue pour loger un ensemble de barres (B), placées côte à côte et en contact les unes avec les autres,
une pluralité de dispositifs de sélection et de chargement à commande électromécanique (14), espacés les uns des autres le long de ladite direction d'introduction (x) et conçus pour être déplacés verticalement dans une direction ou dans l'autre afin de ne saisir qu'une seule barre (B) à la fois dudit ensemble de barres (B) logées dans la station de stockage (12) et de placer la barre (B) ainsi saisie dans la zone d'introduction (A), et
des moyens de commande électrique (46, 48) agencés pour commander de manière synchrone le mouvement vertical desdits dispositifs de sélection et de chargement (14) dans une direction ou dans l'autre, **caractérisé en ce que** chaque dispositif de sélection et de chargement (14) comprend un corps de support mobile verticalement (42), un bras oscillant (50) pivotant au niveau d'un point intermédiaire de celui-ci sur le corps de support (42) pour osciller par rapport au corps de support (42) autour d'un axe de rotation (y), lequel est orienté horizontalement et perpendiculairement à ladite direction d'introduction (x), entre une première position et une seconde position, un élément sélecteur (60) monté au niveau d'une extrémité du bras oscillant (50) et conçu pour séparer à chaque fois l'une des barres (B) agencées dans la station de stockage (12) des barres (B) restantes, et un élément en forme de support (64) agencé au-dessous du bras oscillant (50) et conçu pour supporter la barre (B) lors du mouvement depuis la station de stockage (12) vers la zone d'introduction (A).

2. Appareil selon la revendication 1, dans lequel lesdits moyens de commande électrique (46, 48) comprennent un arbre d'entraînement (46) rotatif autour d'un axe de rotation horizontal (x₂), en particulier parallèle à ladite direction d'introduction (x), un moteur électrique agencé pour entraîner l'arbre d'entraînement (46) en rotation autour dudit axe de rotation (x₂), et un moyen de conversion de mouvement (48) pour convertir le mouvement rotatif de l'arbre d'entraînement (46) en un mouvement de translation vertical de chaque dispositif de sélection et de chargement (14).

3. Appareil selon la revendication 2, dans lequel ledit moyen de conversion de mouvement (48) comprend, pour chaque dispositif de sélection et de chargement (14), une chaîne ou courroie respective.

4. Appareil selon l'une quelconque des revendications précédentes, dans lequel la station de stockage (12) comprend une pluralité de goulottes (16), chacune associée à un dispositif de sélection et de chargement (14) respectif et comprenant chacune une surface plate (18) respective, inclinée par rapport à l'horizontale, sur laquelle ledit ensemble de barres (B) est destiné à être placé.

5. Appareil selon la revendication 4, dans lequel la station de stockage (12) comprend en outre, pour chaque goulotte (16), un élément de réglage (20) respectif s'étendant parallèlement à la surface plate (18) de manière à identifier avec celle-ci un interstice (22) pour l'insertion des barres (B) et est réglable à chaque fois à une distance donnée de la surface plate (18) de manière à adapter la hauteur de l'interstice (22) à la dimension transversale des barres (B) à charger dans la station de stockage (12).

6. Appareil selon la revendication 4 ou la revendication 5, dans lequel la station de stockage (12) comprend en outre, pour chaque goulotte (16), au moins un élément de butée (34) qui est mobile entre une première position, dans laquelle il fait saillie vers le haut depuis la surface plate (18) pour maintenir les barres (B) agencées sur la goulotte (16) en position, et une seconde position, dans laquelle il est agencé entièrement au-dessous de la surface plate (18) pour permettre au dispositif de sélection et de chargement (14) associé de sélectionner et de charger la première des barres (B) placées sur la goulotte (16).

7. Appareil selon la revendication 6, dans lequel l'élément de butée (34) de chaque goulotte (16) est normalement maintenu, par une action de sollicitation élastique, dans ladite première position et dans lequel chaque dispositif de sélection et de chargement (14) est pourvu d'un élément pousseur (40) agencé pour provoquer le déplacement de l'élément de butée (34) de la goulotte (16) associée de ladite première position vers ladite seconde position suite au mouvement vertical vers le bas du dispositif de sélection et de chargement (14).

8. Appareil selon l'une quelconque des revendications précédentes, dans lequel l'élément sélecteur (60) de chaque dispositif de sélection et de chargement (14) est conçu comme un élément avec une forme tronconique.

9. Appareil selon l'une quelconque des revendications 4 à 7, dans lequel l'élément sélecteur (60) de chaque dispositif de sélection et de chargement (14) a une conicité qui n'est pas inférieure à la pente de la surface plate (18) de la goulotte (16) respective.

10. Appareil selon la revendication 8 ou la revendication 9, dans lequel l'élément sélecteur (60) de chaque dispositif de sélection et de chargement (14) comprend un rebord à bride (62) au niveau d'une base principale dudit élément.

11. Appareil selon l'une quelconque des revendications précédentes, dans lequel chaque dispositif de sélection et de chargement (14) comprend des moyens de ressort (52) pour exercer sur le bras oscillant (50) une action de sollicitation tendant à maintenir le bras oscillant dans ladite première position, et dans lequel l'appareil (10) comprend en outre, pour chaque dispositif de sélection et de chargement (14), un mécanisme à came (56, 58) agencé pour commander la rotation du bras oscillant (50), en coopération avec lesdits moyens de ressort (52), entre ladite première position et ladite seconde position.
